# EUROPÄISCHE PATENTSCHRIFT

(11) **EP 2 694 326 B1**
(45) Veröffentlichungstag und Bekanntmachung des Hinweises auf die Patenterteilung: **10.05.2017**
(21) Anmeldenummer: 12715821.0
(22) Anmeldetag: 27.03.2012
(51) Int. Cl.: B60N 2/28

(54) **HALTEBÜGEL IN EINEM KRAFTFAHRZEUG**
RETAINING BRACKET IN AN AUTOMOBILE
ÉTRIER DE MAINTIEN DANS UN VÉHICULE AUTOMOBILE

(30) Priorität: 07.04.2011 DE 102011016291
(43) Veröffentlichungstag der Anmeldung: 12.02.2014
(73) Patentinhaber: Volkswagen Aktiengesellschaft, 38436 Wolfsburg (DE)
(72) Erfinder: DANG, Tran Minh, 38440 Wolfsburg (DE); EBELING, Rüdiger, 38106 Braunschweig (DE); NEUMANN, Thomas, 38446 Wolfsburg (DE)
(86) Internationale Anmeldenummer: PCT/EP2012/001326
(87) Internationale Veröffentlichungsnummer: WO 2012/136319

(56) Entgegenhaltungen:
- EP-A2- 1 122 119
- JP-A- 2009 001 191
- US-A1- 2004 080 193
- US-A1- 2004 080 195
- US-B1- 6 485 055

## Beschreibung

Die Erfindung betrifft eine Befestigungsanordnung für ein Fahrzeug mit einem Haltebügel nach dem Oberbegriff des Patentanspruches 1, der Teil einer Kindersitzverankerung sein kann oder als Verzurröse oder dergleichen verwendet werden kann. Zudem betrifft die Erfindung eine Vormontageeinheit nach dem Patentanspruch 8 und ein Kraftfahrzeug nach Patentanspruch 9, deren Bestandteil ein solcher Haltebügel ist.

Derartige Haltebügel sind oftmals unmittelbar am Bodenblech der Karosserie verankert, um bei Gebrauch eine beschädigungsfreie Krafteinleitung in die Fahrzeugkarosserie zu gewährleisten.

Aus der EP 1 122 119 A2 ist ein Fahrzeug mit einem Haltebügel bekannt, der ein U-förmiger Drahtbügel mit einem Basissteg und davon abgewinkelten U-Schenkeln ist. Die U-Schenkel des Drahtbügels können bei einer werksseitigen Montage in einem Vormontageschritt zunächst im Karosserie-Rohbau des Kraftfahrzeugs mittels Schweißung an einer Verstärkungsplatte angebunden werden, wodurch sich eine noch vom Karosserieblech losgelöste Vormontageeinheit ergibt. Anschließend wird die Verstärkungsplatte am Karosserieblech angeschraubt. Auch bekannt ist es die Verstärkungsplatte beispielsweise durch eine Widerstandspunktschweißung am Karosserieblech anzuschweißen.

Gemäß der US 6,485,055 B1 ist ein Haltebügel an einer Verstärkungsplatte angeschweißt und diese wiederum an der Fahrzeugkarosserie durch Schweißen befestigt.

Bei dem oben erwähnten Vormontageschritt besteht die Problematik darin, dass sich Schweißspritzer auf der Anbindungsfläche des Karosserieblechs festsetzen können, so dass eine Nachbehandlung erforderlich ist, um eine einwandfreie Schweißverbindung zwischen der Verstärkungsplatte und dem Fahrzeugboden zu gewährleisten. Um solche Schweißspritzer auf der Anbindungsfläche zu vermeiden, kann während des Vormontageschrittes der die Haltebügel-Anbindung umgebende Karosseriebereich fertigungstechnisch aufwendig mit zum Beispiel einer Schutzfolie abgedeckt werden.

Aus der DE 10 2005 042 623 A1 ist allgemein eine Kindersitzverankerung bekannt, bei der ein Verankerungsmittel des Kindersitzes in der Gebrauchslage in Eingriff mit den oben beschriebenen Haltebügeln bringbar sind, die am Fahrzeugboden verankert sind. Aus der WO 03/070510 A1 ist ein weiterer Draht-Haltebügel bekannt, dessen Drahtenden durch Öffnungen eines hohlzylindrischen Trägerelementes geführt sind. Die Drahtenden weisen ausgeweitete Haltezapfen auf, die die Öffnungen des hohlzylindrischen Trägerelementes formschlüssig hintergreifen.

Aus der US 2004/0080195 A1 ist ein im Wesentlichen rechteckiger Haltebügel bekannt, der in einer Platte aufgenommen ist. Die Platte und der Haltebügel werden in einer Pressmaschine miteinander verbunden und anschließend über ein Rohr, das durch Öffnungen in der Platte ragt, an dem Fahrzeug befestigt.

Aus der gattungsgemäßen US 2004/0080193 A1 ist ein Haltebügel bekannt, der in einer Aufnahme aufgenommen ist. Auch die JP 2009 001191 A offenbart einen Haltebügel, der in einer Halteklammer aufgenommen ist und anschließend die Einheit bestehend aus Haltebügel und Halteklammer am Fahrzeugboden festgelegt ist.

Die Aufgabe der Erfindung besteht darin, eine Befestigungsanordnung für ein Fahrzeug mit einem Haltebügel bereitzustellen, der in fertigungstechnisch einfacher sowie zuverlässiger Weise im Fahrzeug verankert werden kann.

Die Aufgabe ist durch die Merkmale des Patentanspruches 1 oder der Patentansprüche 8 oder 9 gelöst. Bevorzugte Weiterbildungen der Erfindung sind in den Unteransprüchen offenbart.

Die Erfindung beruht allgemein auf dem Gedanken, den Haltebügel nicht mittels einer Stoffschlussverbindung, etwa eine Schweißverbindung, oder einer Kraftschlussverbindung an der Fahrzeugkarosserie anzubinden, sondern durch eine Formschlussverbindung, die fertigungstechnisch wesentlich einfacher zu bewerkstelligen ist, ohne dass hierfür ein größerer apparatetechnischer Aufbau erforderlich wäre. So wird für die Formschlussverbindung zwischen dem Haltebügel-Fußteil und dem Karosserieblech ein Montagespalt vorgesehen, in dem das Haltebügel-Fußteil zum Untergreifen des Verstärkungselementes formschlüssig einsetzbar ist. Der hierfür erforderliche Montagespalt wird somit unmittelbar durch das Karosserieblech und durch das Verstärkungselement begrenzt, welches ein formstabiles plattenförmiges Blechteil mit im Vergleich zum Karosserieblech größerer Wandstärke sein kann. In der Zusammenbaulage kann das Verstärkungselement mit seiner Montageseite großflächig in Anlage mit dem Fahrzeugboden gebracht sein und zum Beispiel mit diesem verschweißt sein.

Erfindungsgemäß ist der Haltebügel ein einfaches Drahtbiegeteil, etwa ein U-förmiger Drahtbügel, dessen Kopfteil zur Verankerung eines Kindersitzes oder anderer Gegenstände dient, während dessen Fußteil das Verstärkungselement untergreift. Dies bringt fertigungstechnische Vorteile. Das Kopfteil wird bei einer solchen U-förmigen Gestaltung des Haltebügels durch einen quer verlaufenden Basissteg mit davon abgewinkelten U-Schenkel gebildet. Die U-Schenkel des Kopfteils sind in einer Längsrichtung mit Fußabschnitten verlängert. Diese bilden das Fußteil im Sinne der Erfindung und untergreifen in der Zusammenbaulage das Verstärkungselement formschlüssig. Die U-Schenkel des Kopfteils und die Fußabschnitte sind an Biegekanten zueinander abgewinkelt. Alternativ zur Ausführung als Drahtbiegeteil kann der Haltebügel ein beliebig herstellbares Formteil, beispielhaft ein Spritzgussteil oder dergleichen, sein. Das Verstärkungselement kann zudem eine Montageöffnung aufweisen, durch die das im Montagespalt angeordnete Fußteil des Haltebügels in das von dem Verstärkungselement abragende Kopfteil übergeht. Die Montageöffnung kann bevorzugt schlitzartig beziehungsweise als Langloch ausgeführt sein. In der Zusammenbaulage ist eine einwandfreie Verankerung des Haltebügels am Karosserieblech zu gewährleisten. Wie bereits oben erwähnt, kann hierzu das vom Haltebügel untergriffene Verstärkungselement eine Formschlusskontur aufweisen. Die Formschlusskontur kann wiederum durch eine Anzahl von Bewegungsanschlägen gebildet sein, die eine Bewegung des Fußteils in der Längsrichtung und/oder in der Querrichtung unterbinden, das heißt das Haltebügel-Fußteil sowohl in der Längsrichtung als auch in der Querrichtung spielfrei fixieren. Hierzu weist das Verstärkungselement erfindungsgemäß eine Anschlagkontur auf, die die Biegekanten des Drahtbügels außenseitig umgreift. Die Anschlagkontur kann beispielhaft durch am Öffnungsrand der Montageöffnung des Verstärkungselements schalenförmige Stützabschnitte gebildet sein, die eingeprägt sind und die die oben erwähnten Biegekanten des Haltebügels außenseitig umgreifen und somit Anschläge bilden, die in der Längsrichtung der U-Schenkel wirken.

Das Fußteil des Haltebügels kann bevorzugt mittels einer Formschlusskontur spielfrei im Montagespalt angeordnet sein. Die Formschlusskontur kann im Verstärkungselement und/oder im Karosserieblech angeordnet sein. Damit wird ein Bewegungsspiel des im Montagespalt gehalterten Fußteils des Haltebügels weitgehend unterbunden. Beispielhalft kann der Montagespalt zumindest teilweise dem Außenprofil des Fußteils konturangepasst folgen bzw. eine Negativform des Fußteils bilden.

Der Montagespalt zwischen dem Karosserieblech und dem Verstärkungselement kann durch Einprägungen begrenzt sein, die im Verstärkungselement und/oder im Karosserieblech zum Beispiel durch Blechumformung eingearbeitet sind. Die Einprägungen können einander gegenüberliegend sowohl im Verstärkungselement als auch im Karosserieblech vorgesehen sein, und beidseitig das Fußteil formschlüssig umgreifen.

Für den Fall, dass ein U-förmiger Drahtbügel mit zum Beispiel einem Rundprofil verwendet wird, können die im Verstärkungselement und/oder im Karosserieblech vorgesehenen Einprägungen rinnenförmige Befestigungssicken sein, die sich in der Längsrichtung der U-Schenkel des Haltebügels erstrecken und die die Fußabschnitte des Drahtbügels formschlüssig umfassen.

Das Querschnittsprofil der im Verstärkungselement/Karosserieblech vorgesehenen Befestigungssicken kann dem Drahtprofil der Fußabschnitte des Drahtbügels entsprechen, wodurch sich in einfacher Weise eine formschlüssige bzw. spielfreie Anordnung der Fußabschnitte in den Befestigungssicken ergibt.

Als in der Querrichtung wirkende Queranschläge können beispielhaft die Seitenwände der in Längsrichtung verlaufenden Sicken vorgesehen sein. Hierzu ist das Sicken-Hohlprofil derart dimensioniert, dass die vom Sicken-Boden hochgezogenen Seitenwände die darin eingesetzten Draht-Fußabschnitte des Haltebügels formschlüssig sowie nahezu spielfrei umfassen können. Zusätzlich kann zu den, in der Längsrichtung verlaufenden Befestigungssicken zumindest eine Quersicke vorgesehen sein, in die beispielsweise ein abgewinkeltes Endstück des Draht-Fußabschnittes eingreifen kann. Auf diese Weise ist durch die Quersicke ebenfalls ein Längsanschlag bereitgestellt, der eine Längsbewegung der unterhalb des Verstärkungselementes eingesetzten Fußabschnitte unterbindet.

Um eine fertigungstechnisch einfache Verankerung des Haltebügels am Fahrzeugboden zu gewährleisten, kann das Verstärkungselement und der Haltebügel in einem Vormontageschritt zunächst unabhängig vom Karosserieblech zu einer einteiligen Vormontageeinheit zusammengebaut werden, in der das Verstärkungselement und der Haltebügel zueinander in lagerichtiger Formschlussverbindung sind. Anschließend wird die so hergestellte Vormontageeinheit am Karosserieblech befestigt, zum Beispiel in Schweißverbindung mit dem Karosserieblech gebracht. Hierzu kann das Verstärkungselement mit seiner Montageseite großflächig auf dem Karosserieblech verschweißt werden.

Um mit geringem montagetechnischen Aufwand die oben erwähnte Vormontageeinheit herzustellen, können spezielle Vormontagemittel vorgesehen werden. Bevorzugt weisen solche Vormontagemittel Rastelemente auf, mit deren Hilfe das Verstärkungselement und der Haltebügel werkzeugfrei zusammengebaut werden können. Die Rastelemente können den Haltebügel vor einem unbeabsichtigten Ablösen von der Montageseite des Verstärkungselementes sichern. Insbesondere können die Rastelemente am Verstärkungselement angeformte Rastlaschen sein, die das Haltebügel-Fußteil, insbesondere die Draht-Fußabschnitte des Haltebügels, formschlüssig umgreifen können. Die Rastlaschen können aus durch Stanzen hergestellte Freischnitte des Verstärkungselementes herausgebogen sein.

Bevorzugt können die Rastlaschen unmittelbar aus den hochgezogenen Seitenwänden der Befestigungssicken herausgebogen werden, in denen die Draht-Fußabschnitte des Drahtbügels eingesetzt sind. Alternativ dazu können die Rastelemente auch in jeder anderen Konfiguration am Verstärkungselement ausgebildet sein. Beispielhaft kann das Verstärkungselement zumindest eine Rastausnehmung aufweisen, in deren Öffnungsrand ein Rastvorsprung ausgebildet ist, der in den Durchlassquerschnitt der Rastausnehmung einragt. Der Rastvorsprung kann in Rasteingriff mit einer Gegenkontur, etwa einer Rastkerbe, gebracht werden, die zum Beispiel an einem Drahtendstück des Haltebügels vorgesehen ist. Das Drahtendstück des Haltebügels kann in der Zusammenbaulage durch die Rastausnehmung des Verstärkungselements ragen.

Nachfolgend ist der Zusammenbau eines U-förmigen Drahtbügels mit dem Verstärkungselement erläutert. Demzufolge wird in einem Vormontageschritt das Kopfteil des Drahtbügels ausgehend von der Montageseite des Verstärkungselements durch die Montageöffnung hindurchgeführt, bis die Fußabschnitte des Drahtbügels in Rastverbindung mit den am Verstärkungselement vorgesehenen Rastelementen kommen. Die so gebildete Vormontageeinheit wird anschließend in einem Endmontageschritt zum Beispiel durch Schweißen am Karosserieblech befestigt.

Nachfolgend sind Ausführungsbeispiele der Erfindung anhand der beigefügten Figuren beschrieben.

Es zeigen:
- Fig. 1: einen am Karosserieboden des Fahrzeuges angebundenen Haltebügel in Zusammenbaulage;
- Fig. 2: eine Seitenschnittdarstellung entlang der Schnittebene I-I aus der Fig. 1;
- Fig. 3: eine Anordnung zur Anbindung des Haltebügels in einer Explosionsdarstellung;
- Fig. 4 und 5: jeweils Ansichten, die den Zusammenbau des Haltebügels mit einer Verstärkungsplatte zu einer Vormontageeinheit veranschaulichen;
- Fig. 6: eine Vormontageeinheit gemäß einem weiteren Ausführungsbeispiel;
- Fig. 7 und 8: jeweils Varianten einer Rastverbindung zwischen dem Haltebügel und der Verstärkungsplatte.

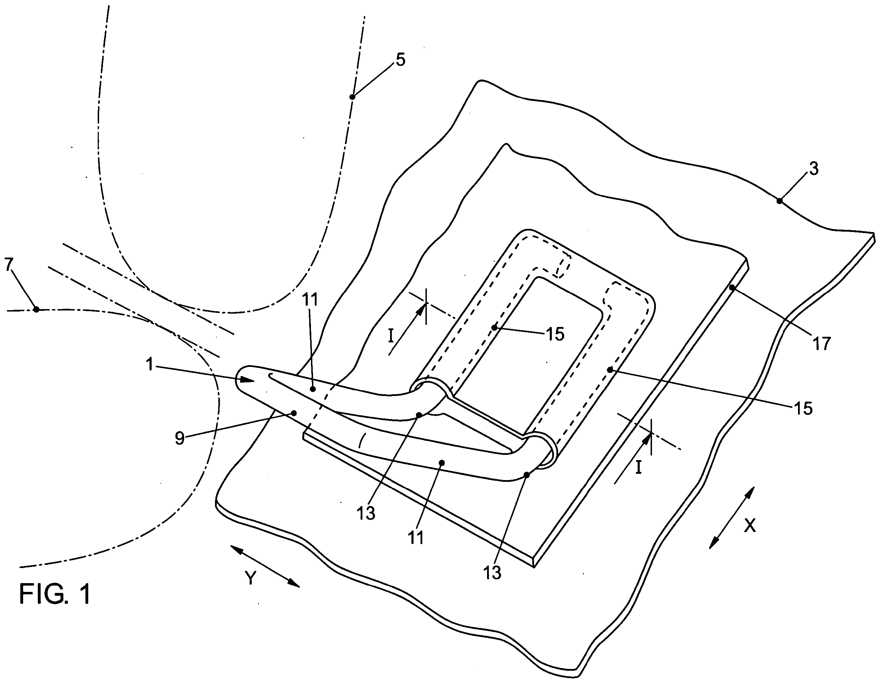

In der Fig. 1 ist ausgehend von einem Fahrzeug-Innenraum in stark vereinfachter Darstellung ein Haltebügel 1 gezeigt, der am Karosserieboden 3 eines Fahrzeuges angebunden ist. Der Haltebügel 1 ist im Endmontagezustand des Fahrzeuges zwischen der in Fig. 1 mit strichpunktierten Linien angedeuteten Rückenlehne 5 und einer Sitzfläche 7 einer Rücksitzbank in den Fahrzeuginnenraum geführt und dient als Verankerungspunkt zum Befestigen eines Kindersitzes auf der Rücksitzbank des Fahrzeuges.

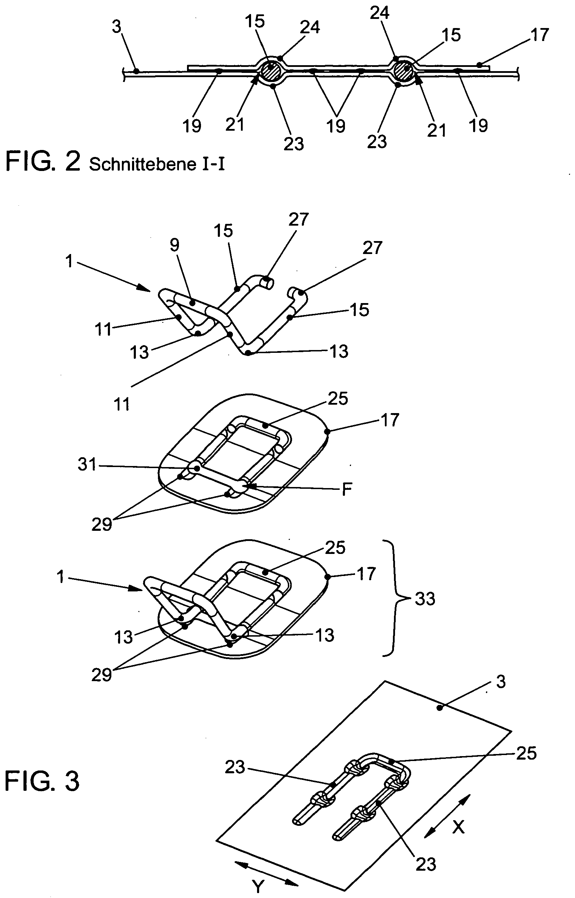

Der Haltebügel 1 ist in an sich bekannter Weise ein U-förmiges Drahtbiegeteil, das einen, in der Fig. 1 in Querrichtung y sich erstreckenden Basissteg 9 sowie davon abgewinkelte U-Schenkel 11 aufweist. Der Basissteg 9 und die U-Schenkel 11 dienen im Endmontagezustand des Fahrzeuges als ein Kopfteil. Das zwischen der Rückenlehne 5 und der Sitzfläche 7 angeordnete Kopfteil ist zum Fahrzeug-Innenraum hin freilegbar. Die beiden U-Schenkel 11 des Kopfteils des Haltebügels 1 gehen in Draht-Längsrichtung x an Biegekanten 13 in davon stumpfwinklig abgewinkelte Fußabschnitte 15 über. Die Drahtbügel-Fußabschnitte 15 bilden das Fußteil im Sinne der Erfindung und untergreifen in der, in der Fig. 1 gezeigten Zusammenbaulage eine formstabile Verstärkungsplatte 17, die gemäß der Fig. 2 an Schweißpunkten 19 mit dem Karosserieboden 3 verbunden ist.

Im Unterschied zu einer solchen stoffschlüssigen Schweißverbindung 19 zwischen der Verstärkungsplatte 17 und dem Karosserieboden 3 ist der Drahtbügel 1 alleine durch eine Formschlussverbindung zwischen der Verstärkungsplatte 17 und dem Karosserieboden 3 befestigt. Bei der Formschlussverbindung sind gemäß der Fig. 2 die Fußabschnitte 15 des Haltebügels 1 in einen, dem Drahtprofil angepassten Montagespalt 21 eingesetzt. Dieser ist durch jeweils gegenüberliegende Befestigungssicken 23, 24 des Karosseriebodens 3 und der Verstärkungsplatte 17 definiert. Hierzu liegen die Befestigungssicken 23, 24 mit ihren offenen Seiten einander gegenüber. Um eine in der Querrichtung y spielfreie Halterung des Haltebügels 1 zu erzielen, sind dabei der Sicken-Boden sowie die davon hochgezogenen Sicken-Seitenwände in dichter Anlage mit der Außenkontur der Draht-Fußabschnitte 15. Die Befestigungssicken 23, 24 wirken somit als Quer-Anschläge, die in der Querrichtung y eine Bewegung der Draht-Fußabschnitte 15 unterbinden.

In der Fig. 3 ist der Karosserieboden 3 sowie die Verstärkungsplatte 17 und der Haltebügel 1 in Explosionsdarstellung gezeigt. Demzufolge sind die beiden in Zusammenbaulage einander zugewandten Befestigungssicken 23, 24 in etwa deckungsgleich im Karosserieboden 3 und in der Verstärkungsplatte 17 eingeformt. Beide Befestigungssicken 23, 24 verlaufen demzufolge in der Draht-Längsrichtung x, wobei die beiden Befestigungssicken 23, 24 an einem Ende mit einer Quersicke 25 ineinander übergehen. Die Quersicke 25 ist sowohl im Karosserieboden 3 als auch in der Verstärkungsplatte 17 eingeformt und dient in der Zusammenbaulage als ein Längs-Anschlag, der eine Bewegung des Haltebügels 1 in der Längsrichtung x unterbindet. Hierzu sind in der Zusammenbaulage die gemäß der Fig. 3 abgewinkelten Endstücke 27 der Draht-Fußabschnitte 15 in der Quersicke 25 eingesetzt. Die den Endstücken 27 in der Längsrichtung x gegenüberliegenden Biegekanten 13 sind in der Zusammenbaulage ebenfalls in Anlage mit einer Anschlagkontur 29, die im Öffnungsrand einer Montageöffnung 31 der Verstärkungsplatte 17 ausgebildet ist. Die Anschlagkontur 29 besteht demnach aus schalenförmigen Stützabschnitten, die im Öffnungsrand der Montageöffnung 31 eingeprägt sind.

Demzufolge wirken in der Draht-Längsrichtung x die schalenförmigen Stützabschnitte 29 sowie die Quersicke 25 jeweils als Längs-Anschläge, die in der Längsrichtung x eine Bewegung des Haltebügels unterbinden. Die Befestigungssicken 23, 24 bilden demgegenüber Quer-Anschläge, die ein Bewegungsspiel in der Querrichtung y unterbinden.

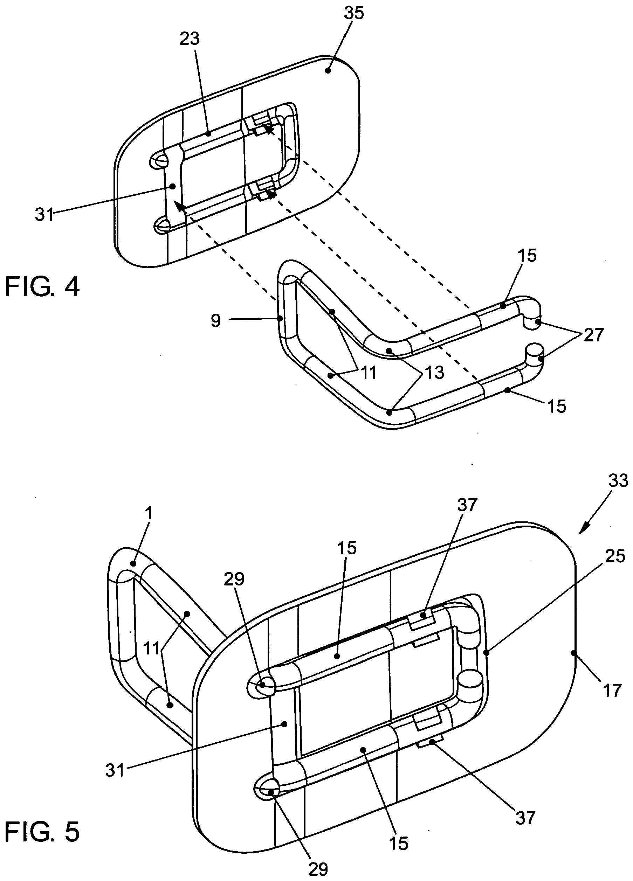

In den folgenden Figuren 4 und 5 ist der Zusammenbau des Haltebügels 1 mit der Verstärkungsplatte 17 zu einer Vormontageeinheit 33 (Fig. 5) veranschaulicht. Demzufolge wird zunächst der Haltebügel 1 mit seinem Kopfteil ausgehend von einer Montageseite 35 der Verstärkungsplatte 17 mit seinem Kopfteil durch die Montageöffnung 31 geführt bis die Draht-Fußabschnitte 15 formschlüssig in die Befestigungssicken 23 sowie die Quersicke 25 eingelegt sind. Um eine einfache Handhabung dieser so gebildeten Vormontageeinheit 33 zu erzielen, sind in der Verstärkungsplatte 17 Rastlaschen 37 ausgebildet, die die Draht-Fußabschnitte 15 des Haltebügels 1 umgreifen. Die Rastlaschen 37 sind gemäß der Fig. 4 durch eine Blechbearbeitung aus Freischnitten der Befestigungssicken 23 herausgebogen.

Alternativ zu der in der Fig. 4 gezeigten Montagerichtung kann der Haltebügel 1 auch zunächst mit seinen Fußabschnitten 15 durch die Montageöffnung 31 der Verstärkungsplatte 17 geschoben werden. Da die Fußseite des Haltebügels 1 schmaler als dessen Kopfseite ausgelegt ist, kann die gesamte Anordnung in der y-Richtung vergleichsweise schmal gebaut werden, wodurch Kosten und Gewicht eingespart werden können.

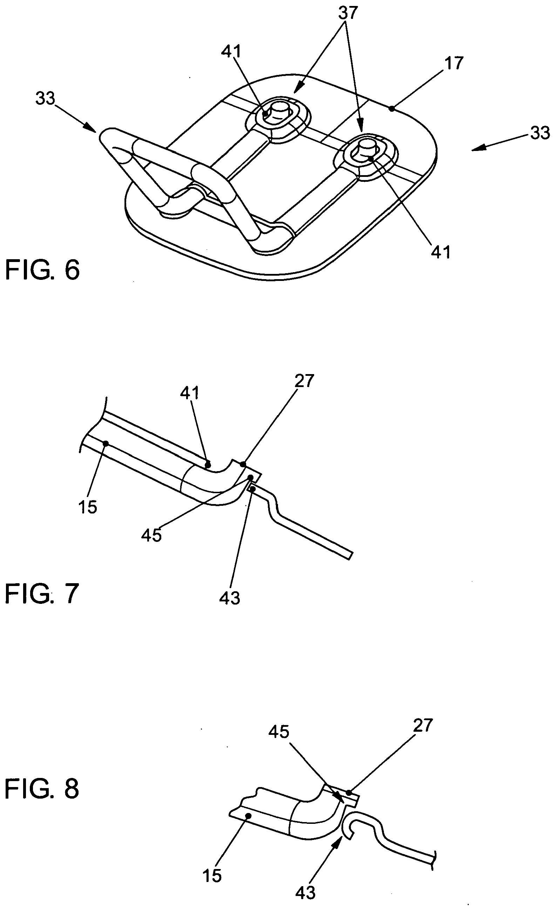

In den nachfolgenden Fig. 6 bis 8 ist eine im Vergleich zur Fig. 5 alternative Vormontageeinheit 33 dargestellt. Im Unterschied zur Fig. 5 sind die Rastelemente 37 nicht als Rastlaschen aus den Befestigungssicken 23 herausgebogen, sondern weist die Verstärkungsplatte 17 vielmehr Rastausnehmungen 41 auf, durch die die Endstücke 27 des Haltebügels 1 nach oben ragen. Gemäß der Fig. 7 ist in jeder Rastausnehmung 41 eine Rastnase 43 ausgebildet, die von einer korrespondierenden Rastkerbe 45 des Endstückes 27 des Haltebügels 1 umgriffen wird.

Alternativ zu der in der Fig. 7 gezeigten Rastnase 43 kann diese auch als gebogene Rastnase ausgeführt sein, wie es in der Fig. 8 dargestellt ist.

## Patentansprüche

1. Befestigungsanordnung für ein Fahrzeug, mit einem Haltebügel (1), insbesondere Drahtbügel, dessen Fußteil (15) an einem, an einem Karosseriebauteil (3) des Fahrzeugs festgelegten Verstärkungselement (17), insbesondere einer Verstärkungsplatte, verankerbar ist, wobei zur Verankerung des Fußteils (15) zwischen dem Verstärkungselement (17) und dem Karosseriebauteil (3) ein Montagespalt (21) gebildet ist, in dem das Fußteil (15) des Haltebügels (1) zum Untergreifen des Verstärkungselements (17) angeordnet ist, wobei der Haltebügel (1) ein aus dem Montagespalt (21) ragendes Kopfteil aufweist, das U-förmig mit einem Basissteg (9) und mit davon abgewinkelten U-Schenkeln (11) gebildet ist und wobei die U-Schenkel (11) des Kopfteils in einer Längsrichtung (x) mit, das Fußteil (15) bildenden Fußabschnitten verlängert sind, die das Verstärkungselement (17) untergreifen, wobei die U-Schenkel (11) des Kopfteils und die Fußabschnitte (15) an Biegekanten (13) zueinander abgewinkelt sind, **dadurch gekennzeichnet, dass** das Verstärkungselement (17) eine Anschlagkontur (29) aufweist, die die Biegekanten (13) des Drahtbügels (1) außenseitig umgreift.

2. Befestigungsanordnung nach Anspruch 1, **dadurch gekennzeichnet, dass** das Fußteil (15) des Haltebügels (1) im Montagespalt (21) mittels einer im Verstärkungselement (17) und/oder in dem Karosseriebauteil (3) ausgebildeten Formschlusskontur gehaltert ist, mit der das Fußteil (15) spielfrei im Montagespalt (21) angeordnet ist, und dass insbesondere die Formschlusskontur Bewegungsanschläge aufweist, die eine Bewegung des Fußteils (15) in einer Längsrichtung (x) und/oder in einer Querrichtung (y) unterbinden.

3. Befestigungsanordnung nach Anspruch 1 oder 2, **dadurch gekennzeichnet, dass** der Montagespalt (21) durch eine Einprägung (23, 24) im Verstärkungselement (17) und/oder in dem Karosseriebauteil (3) begrenzt ist.

4. Befestigungsanordnung nach Anspruch 3, **dadurch gekennzeichnet, dass** die im Verstärkungselement (17) und/oder in dem Karosseriebauteil (3) vorgesehenen Einprägungen (23, 24) rinnenförmig verlaufende Befestigungssicken sind, in denen die Fußabschnitte (15) des Haltebügels (1) formschlüssig und/oder konturangepasst eingesetzt sind.

5. Befestigungsanordnung nach einem der vorhergehenden Ansprüche, **dadurch gekennzeichnet, dass** das Verstärkungselement (17) eine Montageöffnung (31) aufweist, durch die der Haltebügel vom Montagespalt (21) zu einer Oberseite des Verstärkungselements (17) geführt ist.

6. Befestigungsanordnung nach einem der vorhergehenden Ansprüche, **dadurch gekennzeichnet, dass** dem Verstärkungselement (17) Vormontagemittel (37), insbesondere ein Rastelement, zugeordnet ist, mit dem das Verstärkungselement (17) und der Haltbügel (1) zu einer Vormontageeinheit (33) vormontierbar sind, und dass insbesondere das Vormontagemittel (37) den Haltebügel (1) vor einem Ablösen vom Verstärkungselement (17) sichert.

7. Befestigungsanordnung nach Anspruch 5, **dadurch gekennzeichnet, dass** die Anschlagkontur (29) als schalenförmige Stützabschnitte im Öffnungsrand der Montageöffnung (31) des Verstärkungselements (17) eingeprägt ist.

8. Vormontageeinheit (33) bestehend aus einem Haltebügel (1) mit einem Kopfteil, welches U-förmig mit einem Basissteg (9) und mit davon abgewinkelten U-Schenkeln (11) gebildet ist und wobei die U-Schenkel (11) des Kopfteils in einer Längsrichtung (x) mit, ein Fußteil (15) bildenden Fußabschnitten verlängert sind, wobei die U-Schenkel (11) des Kopfteils und die Fußabschnitte (15) an Biegekanten (13) zueinander abgewinkelt sind und einem Verstärkungselement (17), wobei das Verstärkungselement (17) eine Anschlagkontur (29) aufweist, die die Biegekanten (13) des Drahtbügels (1) außenseitig umgreifen können und wobei der Haltebügel (1) in einer Befestigungsanordnung nach einem der vorhergehenden Ansprüche montierbar ist.

9. Kraftfahrzeug mit einer Befestigungsanordnung nach zumindest einem der Ansprüche 1 bis 7.

## Claims

1. Fastening arrangement for a vehicle, having a retaining bracket (1), in particular a wire bracket, of which the foot part (15) can be anchored on a reinforcing element (17), in particular a reinforcing plate, secured on a bodywork part (3) of the vehicle, wherein, for the purpose of anchoring the foot part (15), an installation gap (21) is formed between the reinforcing element (17) and the bodywork part (3), the foot part (15) of the retaining bracket (1) being arranged in said installation gap in order to engage beneath the reinforcing element (17), wherein the retaining bracket (1) has a head part, which projects out of the installation gap (21) and is formed in a U-shaped manner with a base crosspiece (9) and U limbs (11) angled therefrom, and wherein the U limbs (11) of the head part are extended in a longitudinal direction (x) by foot portions, which form the foot part (15) and engage beneath the reinforcing element (17), wherein the U limbs (11) of the head part and the foot portions (15) are angled in relation to one another at bending edges (13), **characterized in that** the reinforcing element (17) has a stop contour (29), which engages around the bending edges (13) of the wire bracket (1) on the outside.

2. Fastening arrangement according to Claim 1, **characterized in that** the foot part (15) of the retaining bracket (1) is retained in the installation gap (21) by means of a form-fitting contour, which is formed in the reinforcing element (17) and/or in the bodywork part (3) and by way of which the foot part (15) is arranged in a play-free manner in the installation gap (21), and **in that** in particular the form-fitting contour has movement stops, which prevent the foot part (15) from moving in a longitudinal direction (x) and/or in a transverse direction (y).

3. Fastening arrangement according to Claim 1 or 2, **characterized in that** the installation gap (21) is delimited by a stamped formation (23, 24) in the reinforcing element (17) and/or in the bodywork part (3).

4. Fastening arrangement according to Claim 3, **characterized in that** the stamped formations (23, 24), which are provided in the reinforcing element (17) and/or in the bodywork part (3), are channel-formed fastening beads, in which the foot portions (15) of the retaining bracket (1) are inserted in a form-fitting and/or contour-adapted manner.

5. Fastening arrangement according to one of the preceding claims, **characterized in that** the reinforcing element (17) has an installation opening (31), through which the retaining bracket is guided from the installation gap (21) to an upper side of the reinforcing element (17).

6. Fastening arrangement according to one of the preceding claims, **characterized in that** the reinforcing element (17) is assigned preassembly means (37), in particular a latching element, by way of which the reinforcing element (17) and the retaining bracket (1) can be preassembled to form a preassembly unit (33), and **in that** in particular the preassembly means (37) secures the retaining bracket (1) against being detached from the reinforcing element (17).

7. Fastening arrangement according to Claim 5, **characterized in that** the stop contour (29) is stamped in the form of bowl-like supporting portions in the opening periphery of the installation opening (31) of the reinforcing element (17).

8. Preassembly unit (33) comprising a retaining bracket (1) with a head part, which is formed in a U-shaped manner with a base crosspiece (9) and with U limbs (11) angled therefrom, and wherein the U limbs (11) of the head part are extended in a longitudinal direction (x) by foot portions, which form a foot part (15), wherein the U limbs (11) of the head part and the foot portions (15) are angled in relation to one another at bending edges (13), and also comprising a reinforcing element (17), wherein the reinforcing element (17) has a stop contour (29), which can engage around the bending edges (13) of the wire bracket (1) on the outside, and wherein the retaining bracket (1) can be installed in a fastening arrangement according to one of the preceding claims.

9. Motor vehicle having a fastening arrangement according to at least one of Claims 1 to 7.

## Revendications

1. Dispositif de fixation pour un véhicule, avec un étrier de maintien (1), en particulier un étrier en fil, dont la partie de pied (15) peut être ancrée à un élément de renforcement (17), en particulier à une plaque de renforcement, assemblé à une pièce de carrosserie (3) du véhicule, dans lequel une fente de montage (21) est formée entre l'élément de renforcement (17) et la pièce de carrosserie (3) pour l'ancrage de la partie de pied (15), dans laquelle la partie de pied (15) de l'étrier de maintien (1) est disposée de façon à accrocher par dessous l'élément de renforcement (17), dans lequel l'étrier de maintien (1) présente une partie de tête sortant hors de la fente de montage (21), qui est configurée en forme d'U avec une âme de base (9) et des branches de U (11) coudées à partir de celle-ci, et dans lequel les branches de U (11) de la partie de tête sont prolongées dans une direction longitudinale (x) avec des sections de pied formant la partie de pied (15), qui accrochent par dessous l'élément de renforcement (17), dans lequel les branches de U (11) de la partie de tête et les sections de pied (15) sont coudées l'une par rapport à l'autre à des arêtes de flexion (13), **caractérisé en ce que** l'élément de renforcement (17) présente un contour de butée (29), qui entoure extérieurement les arêtes de flexion (13) de l'étrier en fil (1).

2. Dispositif de fixation selon la revendication 1, **caractérisé en ce que** la partie de pied (15) de l'étrier de maintien (1) est maintenue dans la fente de montage (21) au moyen d'un contour d'emboîtement formé dans l'élément de renforcement (17) et/ou dans la pièce de carrosserie (3), avec lequel la partie de pied (15) est disposée sans jeu dans la fente de montage (21), et **en ce que** le contour d'emboîtement présente en particulier des butées de déplacement, qui empêchent un déplacement de la partie de pied (15) dans une direction longitudinale (x) et/ou dans une direction transversale (y).

3. Dispositif de fixation selon la revendication 1 ou 2, **caractérisé en ce que** la fente de montage (21) est limitée par une empreinte (23, 24) dans l'élément de renforcement (17) et/ou dans la pièce de carrosserie (3).

4. Dispositif de fixation selon la revendication 3, **caractérisé en ce que** les empreintes (23, 24) prévues dans l'élément de renforcement (17) et/ou dans la pièce de carrosserie (3) sont des moulures de fixation réalisées en forme de rigoles, dans lesquelles les sections de pied (15) de l'étrier de maintien (1) sont insérées par emboîtement et/ou sous forme adaptée au contour.

5. Dispositif de fixation selon l'une quelconque des revendications précédentes, **caractérisé en ce que** l'élément de renforcement (17) présente une ouverture de montage (31), à travers laquelle l'étrier de maintien est guidé depuis la fente de montage (21) jusqu'à un côté supérieur de l'élément de renforcement (17).

6. Dispositif de fixation selon l'une quelconque des revendications précédentes, **caractérisé en ce qu'**un moyen de pré-montage (37), en particulier un élément d'encliquetage, est associé à l'élément de renforcement (17), avec lequel l'élément de renforcement (17) et l'étrier de maintien (1) peuvent être préassemblés en une unité de pré-montage (33), et **en ce que** le moyen de pré-montage (37) assure en particulier l'étrier de maintien (1) contre une séparation de l'élément de renforcement (17).

7. Dispositif de fixation selon la revendication 5, **caractérisé en ce que** le contour de butée (29) est enfoncé comme parties de soutien en forme de coquilles dans le bord d'ouverture de l'ouverture de montage (31) de l'élément de renforcement (17).

8. Unité de pré-montage (33) se composant d'un étrier de maintien (1) avec une partie de tête, qui est configurée en forme d'U avec une âme de base (9) et avec des branches de U (11) coudées à partir de celle-ci et dans laquelle les branches de U (11) de la partie de tête sont prolongées dans une direction longitudinale (x) avec des sections de pied formant une partie de pied (15), dans laquelle les branches de U (11) de la partie de tête et les sections de pied (15) sont coudées l'une par rapport à l'autre à des arêtes de flexion (13) et d'un élément de renforcement (17), dans laquelle l'élément de renforcement (17) présente un contour de butée (29), qui peut entourer extérieurement les arêtes de flexion (13) de l'étrier en fil (1) et dans laquelle l'étrier de maintien (1) peut être monté dans un dispositif de fixation selon l'une quelconque des revendications précédentes.

9. Véhicule automobile avec un dispositif de fixation selon au moins une des revendications 1 à 7.
